# EUROPÄISCHE PATENTSCHRIFT

(11) **EP 1 237 742 B1**
(45) Veröffentlichungstag und Bekanntmachung des Hinweises auf die Patenterteilung: **17.09.2003**
(21) Anmeldenummer: 00985114.8
(22) Anmeldetag: 29.11.2000
(51) Int. Cl.: B60H 1/00

(54) **HEIZ- UND/ODER KLIMAANLAGE FÜR EIN FAHRZEUG MIT TEILLUFTFÜHRUNGSKANAL**
HEATING AND/OR AIR CONDITIONING UNIT FOR A VEHICLE WITH A PARTIAL AIR GUIDE DUCT
INSTALLATION DE CHAUFFAGE ET/OU DE CLIMATISATION POUR VEHICULE COMPORTANT UN CANAL DE GUIDAGE D'AIR PARTIEL

(30) Priorität: 01.12.1999 DE 19957859
(43) Veröffentlichungstag der Anmeldung: 11.09.2002
(73) Patentinhaber: Valeo Klimasysteme GmbH, 96476 Rodach (DE)
(72) Erfinder: DERX, Siegfried, 96215 Lichtenfels (DE)
(74) Vertreter: Hofmann, Harald
(86) Internationale Anmeldenummer: EP0011969
(87) Internationale Veröffentlichungsnummer: WO01040002

(56) Entgegenhaltungen:
- DE-A- 19 515 836
- FR-A- 2 562 845
- FR-A- 2 650 224
- FR-A- 2 737 156
- FR-A- 2 740 398

## Beschreibung

Die vorliegende Erfindung betrifft eine Heiz- und/oder Klimaanlage für ein Fahrzeug.

Üblicherweise enthält eine Heiz- und/oder Klimaanlage für ein Fahrzeug einen Wärmetauscher, dem eine Temperaturklappe, ein zumindest abschnittsweise als Mischkammer und/oder Verteiler dienender Kanal, eine Luftstromsteuerklappe und ein Luftausströmer nachgeschaltet sind. In den meisten Fällen wird der Wärmetauscher mit Motorkühlflüssigkeit beaufschlagt, wobei es ebenfalls möglich ist, hinter dem Wärmetauscher einen zusätzlichen Elektroheizer, zum Beispiel in der Form eines PTC-Heizregisters vorzusehen.

In den letzten Jahren hat es sich herausgestellt, daß der Benutzer eines Kraftfahrzeuges üblicherweise eine sogenannte Temperaturschichtung wünscht, bei welcher klassischerweise die dem Fußraum zugeführte Luft bei einem höherem Temperaturniveau vorzusehen ist, als für die Luft, die durch die im Armaturenbrett angeordneten Luftausströmer hin zu dem Rumpf- und Kopfbereich der Insassen ausgegeben wird. Bis dato wurde versucht, diese Temperaturschichtung dadurch zu erhalten, daß die Luft an unterschiedlichen Orten der Heiz-, Klimaanlage entnommen wurden, wobei eine alternative Vorgehensweise darin besteht, daß man in einer sogenannten Mischkammer die Luftströmungen unterschiedlicher Temperatur in solch einer Weise einführt, daß eine vollständig homogene Mischung nicht stattfindet. Ganz im Gegensatz versucht man dementsprechend eine möglichst geringe Verwirbelung in der Mischkammer zu erzielen, so daß leicht wärmere Luft zum Fußbereich und Luft bei einer leicht niedrigeren Temperatur zum Kopf- und Rumpfbereich der Insassen ausgegeben werden kann.

Eine Heiz- und/oder Klimaanlage, die solch eine virtuelle Schichtung von Luftströmen andenkt, ist in der FR-A-2562845 beschrieben.

Neben der schwierigen Handhabbarkeit von Luftströmungen unterschiedlicher Temperatur, ohne daß eine vollständige Homogenität auftritt, besteht eine Schwierigkeit darin, ausreichend warme Luft an einem speziellen Ausgabeort bereitzustellen. Ein Versuch, speziell den Bedürfnissen des sogenannten Defrostmodus gerecht zu werden, ist in der FR-A-2650224 offenbart, wobei ein Kanal zur Versorgung der Entfrostungsdüsen vorgesehen ist, welcher sich im wesentlichen senkrecht durch die temperaturmäßig geschichteten Luftströme erstreckt.

Aus der FR-A-2737156 ist eine Heizungs-/Belüftungsanlage bekannt, bei der die Mischzone, in der ein Frischluftraum und ein Warmluftraum münden von einem Teilluftführungskanal durchquert wird, um es zumindest einem Teil der Luft aus dem Warmluftraum zu ermöglichen ungestört hin zu dem Defrostaustritt zu gelangen. Bei geschlossenem Defrastkanal kann die Warmluft auch alternativ hin zu einem Verteilungsbereich geführt werden, in jedem Fall dient der hier beschriebene Kanal dazu einen Teil der Mischzone abzuschotten, um diesen als Teilluftführungskanal zu verwenden.

Aus der FR-A-2740398 ist eine weitere Anlage mit Teilluftführungskanal bekannt, der dazu dient, Luft ungestört durch die Mischzone führen zu können, wobei es sich im Gegensatz zu der vorgenannten Schrift nicht um Warmluft, sondern um Frischluft handelt, die hin zu den Mannausströmern im Formbereich geführt werden soll.

Aufgabe der vorliegenden Erfindung ist es, eine bekannte Heiz- und/oder Klimaanlage in solch einer Weise weiterzubilden, daß eine eine virtuelle die Temperaturschichtung unterstützende und/oder modifizierende Luftführung ermöglicht ist

Erfindungsgemäß wird diese Aufgabe durch eine Vorrichtung mit den Merkmalen des Anspruches 1 gelöst. Bevorzugte Ausführugsformen sind in den abhängigen Ansprüchen definiert.

Insbesondere schlägt die vorliegende Erfindung einer Heiz- und/oder Klimaanläge für ein Fahrzeug mit einem Wärmetauscher vor, dem eine Temperaturklappe, ein zumindest abschnittsweise als Mischkammer und/oder Verteiler dienender Kanal, eine Luftstromsteuerklappe und ein Luftausströmer nachgeschaltet sind, wobei die Anlage erfindungsgemäß dadurch gekennzeichnet ist, daß der Kanal in einem der Verteilung dienenden Abschnitt davon einen im wesentlichen parallel verlaufenden Teilluftführungskanal in einer Kanal-in-Kanal-Ausgestaltung enthält, so daß eine Führung von einem Teil der erwärmten, unter optionaler Zuführung klimatisierter Luft im wesentlichen ohne Störeinfluß anderer Luftströmungen ermöglicht ist. Anders ausgedrückt wird erfindungsgemäß eine virtuelle Luftströmungsschichtung, durch eine reale Luftströmungsschichtung ergänzt, wobei die in dem Teilluftführungskanal geführte Luft praktisch keine Störung durch andere, zum Beispiel kältere Luftströme erfährt.

Eine bevorzugte Anwendung für die erfindungsgemäße Lösung sieht vor, daß der Teilluftführungskanal warme Luft hin zu einem Ausströmer führt, der nicht der Defrostausströmer ist, insbesondere hin zu einem Mannausströmer, wie dem mittleren Mannausströmer, somit kann man die mittleren Ausströmdüsen im Armaturenbrett mit einem entsprechend angepaßten Luftdurchsatz und bei einer entsprechend gewünschten hohen Temperatur beaufschlagen. In diesem Zusammenhang ist es insbesondere zu erwähnen, daß durch die erfindungsgemäße Teilluftführung nicht nur ein temperaturtechnischer Einfluß anderer Luftströmungen, sondern auch vielmehr ein geschwindigkeitsmäßiger Einfluß ausgeschlossen wird.

Bei einer bevorzugten Ausführungsform der erfindungsgemäßen Anlage erstreckt sich der Teilluftführungskanal im wesentlichen vertikal nach oben, so daß eine gewisse Kaminwirkung dazu beitragen kann, daß die warme hindurchgeführte Luft beschleunigt, bzw. bei einem höheren Durchsatz gefördert wird.

Vorteilhafterweise kann der Teilluftführungskanal zur Unterstützung des vorangehend angeführten Kamineffektes oder auch alternativ hierzu Luftfördermittel enthalten, wobei alternativ und zusätzlich auch eine elektrische Heizeinrichtung für den hindurchtretenden Teilluftstrom vorgesehen werden kann.

Vorteilhafterweise befindet sich der Teilluftführungskanal an dem Ort in dem Kanal, an dem der Strömungsweg von dem Wärmetauscher zu dem zu versorgenden Luftausströmer am kürzesten ist. Anders ausgedrückt wird der Strömungsweg von anderen Luftströmungen isoliert, der in jedem Fall zu minimaler Temperaturdifferenz zwischen Wärmetauscher und Ausgabeort führt.

Der Teilluftführungskanal kann bei einer bevorzugten Ausführungsform durch die Luftstromsteuerklappe des zugehörigen Kanalabschnittes verschlossen werden. Wenn zum Beispiel eine Teilluftstromführung für warme Luft an den mittleren Ausströmern im Armaturenbrett vorgesehen ist, kann ein Verschließen der Luftstromsteuerklappe für die gesamten Ausströmer im Armaturenbrett auch dazu dienen, den Teilluftströmungskanal zu verschließen.

Um eine dominierende Beaufschlagung des Teilluftführungskanals mit erwärmter und/oder klimatisierter Luft zu fördern, ist vorteilhafterweise dem Kanal, insbesondere der Temperaturklappe zumindest ein Luftleitelement vorgeschaltet, welches die Luft bei geöffneter Temperaturklappe in dem Teilluftführungskanal richtet. Bei einer insbesondere bevorzugten Ausführungsform kann dieses Luftleitelement auch verstellbar ausgestaltet sein.

Vorteilhafterweise liegt der Teilluftführungskanal bezüglich einer zur Fahrtrichtung des Fahrzeugs senkrechten Richtung im wesentlichen mittig in dem Kanal vor. Diese Ausgestaltung ermöglicht es, durch den Wärmetauscher besonders stark temperaturangepaßt Luft zu der Mitteldüse auszugeben, so daß den Insassen bereits kurz nach dem Starten ein angenehmes Warmluftgefühl zur Verfügung gestellt werden kann und dies bei ausreichendem Luftdurchsatz.

Bei einer bevorzugten Ausführungsform bildet ein Teil der Wandung des Teilluftführungskanals einen Teil der Wandung des Kanals selbst. Anders ausgedrückt ist es von Vorteil wenn der Teilluftführungskanal einen Teilabschnitt des gesamten Kanals abtrennt.

Vorteilhafterweise beträgt die Durchtrittsfläche des Teilluftführungskanals weniger als ½, insbesondere weniger als 1/3 der gesamten Durchtrittsfläche des Kanals. Durch diese Ausgestaltung verbleibt neben dem Teilluftführungskanal ein ausreichendes Volumen für aus Kaltluft und Warmluft mischbarer Luft, die zu einem entsprechenden Ausgabeort oder auch einem anderen Ausgabeort zu führen ist.

Um Luftströmungsgeräusche so gering als möglich zu halten, verfügt der Teilluftführungskanal über eine Geometrie, die dem Kanal ähnlich ausgebildet ist.

Weitere Vorteile und Merkmale der vorliegenden Erfindung ergeben sich aus der folgenden rein beispielhaften Beschreibung einer derzeit bevorzugten Ausführungsform, welche in Bezugnahme auf die beiliegenden Zeichnungen erfolgt, in welchen gilt:
- Fig. 1: zeigt eine schematischen Vertikalschnitt durch eine Heiz- und /oder Klimaanlage gemäß einer bevorzugten Ausführungsform der Erfindung.
- Fig. 2: zeigt ausschnittsweise einen Horizontalschnitt durch die in Fig. 1 gezeigte Ausführungsform unmittelbar oberhalb der Temperaturklappe.

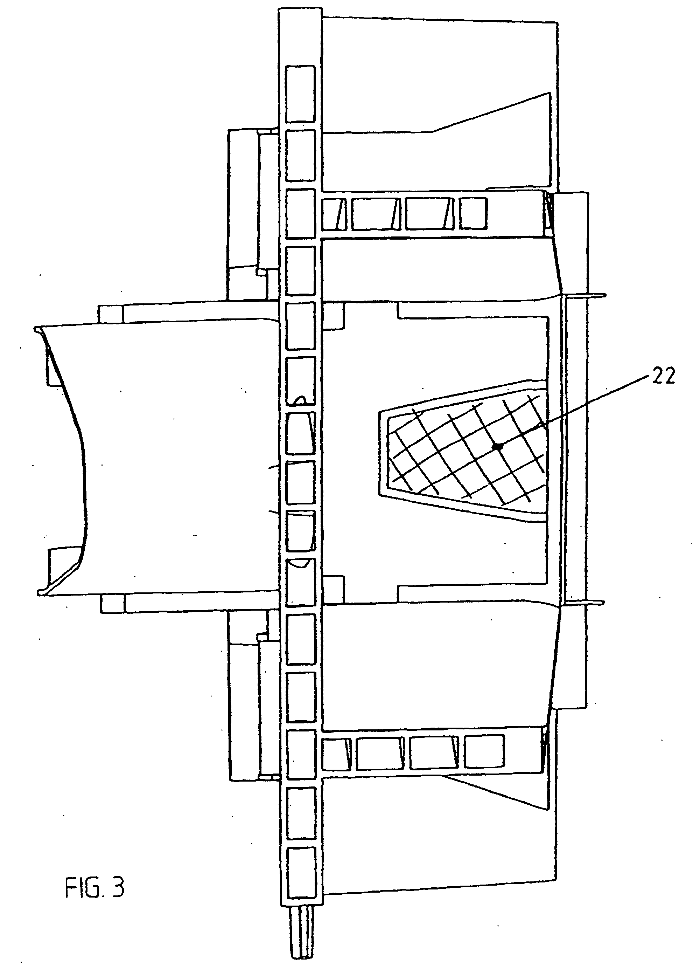

- Fig. 3: zeigt eine Schnittansicht analog zu Fig. 2, jedoch auf der Höhe unmittelbar unterhalb der Luftstromsteuerklappe.

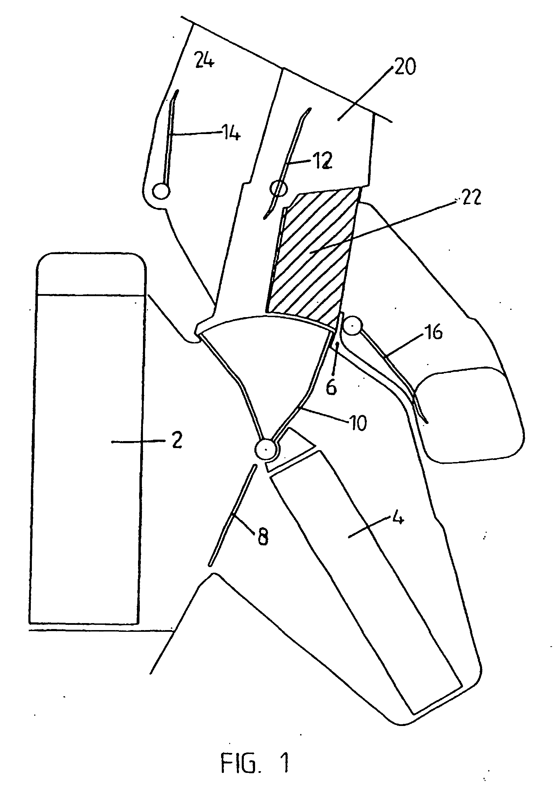

Die in Fig. 1 dargestellte Heiz- und Klimaanlage umfaßt in klassischer Weise einen durch ein nicht dargestelltes Gebläse beaufschlagbaren Verdampfer 2. Die aus dem Verdampfer 2 tretende Luft wird entsprechend der Einstellung einer Steuerklappe 8 anteilig durch einen Heizkörper geführt, welcher mit Motorkühlmittel fluidseitig gespeist wird. Obwohl nicht dargestellt, kann dem Wärmetauscher 4 eine Elektroheizung, zum Beispiel in der Form eines PTC-Heizregisters nachgeschaltet sein. Der nicht durch den Wärmetauscher 4 geführte Anteil an aus dem Verdampfer 2 tretender Luft wird im wesentlichen oberhalb an dem Wärmetauscher 4 vorbeigeführt, wobei dieser Luftanteil durch eine sogenannte Temperaturklappe 10 steuerbar ist. Die Temperaturklappe 10 steuert hierbei gleichzeitig die durch den Wärmetauscher 4 tretende Luftmenge.

Eine eventuell auftretende Vermischung zwischen durch den Wärmetauscher 4 erwärmter Luft und durch den Verdampfer 2 gekühlter Luft findet am Abrißende der Temperaturklappe 10 statt. Durch den von der Temperaturklappe 10 am äußeren Abschnitt durchstrichenen Bereich können bei der gezeigten Ausführungsform generell drei Kanalabschnitte gespeist werden, nämlich ein sogenannter Defrostkanal 24, ein Armaturenbrettluftausströmerkanal 20 und ein Fußraumluftkanal 26. Jeder dieser Kanalabschnitte 20, 24, 26 ist mit einem Luftstromsteuermittel 12, 14 bzw. 16 versehen, so daß der jeweilige Kanal unabhängig von dem anderen Kanalabschnitten selektiv frei gegeben oder gesperrt werden kann.

Die einzelnen, üblicherweise von dem Fahrer wählbaren Belüftungs- und/oder Klimatisiermodi werden im wesentlichen dargestellt durch die Steuerklappe 8 und ein Zusammenspiel aus der Temperaturklappe 10 mit den jeweiligen Luftstromsteuerklappen 12, 14 und 16. In dem sogenannten Defrostmodus soll maximale Warmluftleistung an der Windschutzscheibe bereitgestellt werden. Zu diesem Zweck wird daher die Klappe 8 und die Temperaturklappe 10 jeweils vollständig geöffnet. Die durch den Wärmetauscher 4 erwärmte Luft steht somit gleichmäßig an den Mündungsbereichen der Kanäle 20, 24, 26 an, wobei die Kanäle 20 und 26 durch die jeweiligen Luftstromsteuermittel 12 und 16 verschlossen werden, so daß die Warmluft ausschließlich zu der Windschutzscheibe geführt wird. Der Fachmann wird erkennen, daß in diesem Fall weder eine Temperaturschichtung erforderlich noch sinnvoll ist, insbesondere da Störeinflüsse durch andere Luftströmungen nicht vorliegen können.

Die vorliegende Erfindung zielt daher vielmehr auf solch einen Fall ab, in welchem die Temperaturklappe 10 in einer zwischengelagerten Position vorliegt, oder auf solch eine Fall, in welchem andere Luftströmungen in nicht versperrten Kanälen oder Teilkanälen 20, 24, 26 vorliegen (zum Beispiel Kaltluftrückströmung aus dem Fußbereich). In diesen Fällen kann häufig die klassische Temperaturschichtung nicht zu der gewünschten Temperaturverteilung führen. In der in Fig. 1 dargestellten Ausführungsform soll zum Beispiel die Mitteldüse auf der Höhe des Armaturenbrettes vornehmlich mit Warmluft beschickt werden. Erfindungsgemäß ist daher dem Kanal 20, der zu dieser Mitteldüse führt, mündungsseitig, d.h. unmittelbar im Anschluß an die Temperaturklappe ein Teilluftführungskanal 22 zugeordnet, der sich bei der gezeigten Ausführungsform im wesentlichen von der Temperaturklappe 10 bis hin zu der Verschlußstellung des Luftstromsteuermittels 12 (hier Mitteldüsenklappe) erstreckt.

Der Fachmann wird erkennen, daß somit durch den Teilluftführungskanal 22 ein "Warmluftkanal" gebildet wird, welcher den kürzesten Strömungsweg zwischen Wärmetauscher 4 und der Mitteldüse beschreibt. Durch die diskrete Trennung bezüglich anderer eventuell vorliegender Luftströmungen kann ein Störeinfluß, insbesondere eine Abkühlung praktisch ausgeschlossen werden. Durch den im wesentlichen vertikalen Verlauf dieses Teilluftführungskanals kann der Durchsatz mittels Kamineffekt erhöht werden, wobei optional ein nicht dargestelltes Lüfterelement diese Funktion ersetzen und/oder unterstützen kann. Ferner sollte der Fachmann erkennen, daß auch die Anordnung eines elektrischen Heizers, zum Beispiel eines PTC-Heizregisters in diesem Bereich, d.h. innerhalb des Teilluftführungskanals 22 von Vorteil sein kann, zum Beispiel wenn der Heizwärmetauscher 4 nach dem Fahrzeugstart noch nicht die gewünschte Heizleistung zur Verfügung stellen kann.

Wie dargestellt, entspricht der Mündungsbereich des Teilluftführungskanals im wesentlichen der Kinematik der Temperaturklappe 10. Um ein Richten der warmen Luft, die aus dem Wärmetauscher 4 tritt bevorzugt in den so gebildeten Warmluftkanal 22 zu fordern, sind Luftleitelemente 6 vorgesehen, die insgesamt die Luftströmung hin zu dem Bereich konzentrieren, in welchem sich der Teilluftführungskanal 22 befindet.

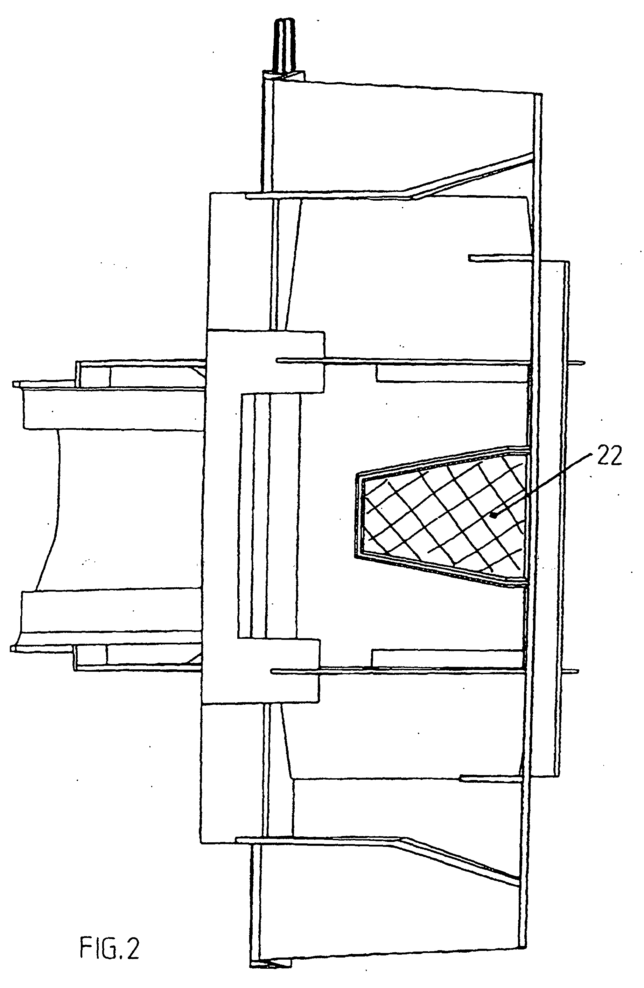

Wie es in Fig. 2 deutlicher zu erkennen ist, nimmt der Teilluftführungskanal lediglich einen Teil des Gesamtquerschnittes des involvierten Kanals ein. In der gezeigten Ausführungsform entspricht die Fläche etwa einem Drittel der gesamten Luftdurchtrittsfläche, wobei wie dargestellt die beiden Kanäle über einen gemeinsamen Wandungsabschnitt verfügen. Wie dargestellt erstreckt sich der Teilluftführungskanal im wesentlichen mittig bezüglich einer zur Fahrzeugrichtung senkrecht verlaufenden Richtung, so daß im Mischbereich, d.h. nach der Temperaturklappe vorliegende Luft, die nicht durch den Teilluftführungskanal geführt wird beliebig steuerbar auf die Kanäle verteilt werden kann. In diesem Zusammenhang wird der Fachmann den strömungstechnisch gewählten Umriß des Teilluftrührungskanals erkennen, der eine Beschickung des zum Fußraum führenden Kanalsystems strömungstechnisch vorteilhaft ermöglicht.

Zusammenfassend läßt sich feststellen, daß durch eine konstruktiv sehr einfache Ausgestaltung eines involvierten Kanalabschnittes eine diskrete Trennung von Temperaturströmen bei unterschiedlichen Temperaturen realisierbar ist, so daß eine deutlich bessere Adaptation an die Bedürfnise der Insassen gegeben ist. Insbesondere wenn wie bei der bevorzugten Ausführungsform dargestellt der Teilluftführungskanal zwischen der Luftstromsteuerklappe des involvierten Kanals und der Temperaturklappe vorgesehen ist, bedarf es keiner weitergehenden Adaptation des Gesamtsystems, so daß das erfindungsgemäße Konzept sich sehr einfach in bestehende Heiz- und/oder Klimaanlagen implementieren läßt.

Obwohl die Erfindung vorangehend vollständig unter beispielhafter Bezugnahme auf eine derzeit bevorzugte Ausführungsform beschrieben wurde, sollte der Fachmann erkennen, daß verschiedenste Veränderungen und Modifikationen im Rahmen der Offenbarung möglich sind. Im einzelnen sollte der Fachmann erkennen, daß der Teilluftführungskanal selbstverständlich nicht ausschließlich auf den wärmsten Anteil der Gesamtluftströmung beschränkt ist, sondern vielmehr in analoger Weise anwendbar ist auf den kältesten Anteil, oder auch jeden dazwischen liegenden Anteil. Maßgeblich ist vielmehr, daß ein ausgewählter Teil der zu Verfügung stehender Luftströmung in solch einer Weise geführt werden kann, daß er Störeinflüssen durch andere Luftströmungen zumindest abschnittsweise nicht unterliegt. Hierdurch -wird zum einen eine variablere Anpaßmöglichkeit für die Benutzereinstellung gegeben, wobei unterstützend in diesem Bereich eine Luftsensorik oder Nachbearbeitungsanordnung vorgesehen werden kann, wie die bereits erwähnte elektrische Heizeinrichtung. Es sollte schließlich erwähnt werden, daß auch mehrere Teilluftführungskanäle in einem Kanal oder auch jeweils ein Teilluftführungskanal in einem jeweiligen Teilkanalabschnitt vorgesehen werden kann. Beispielhaft wäre es möglich, für die Luftausströmer im Armaturenbereich zwei Teilluftführungskanäle vorzusehen, während für den Defrostkanal keine Teilluftführung vorgesehen ist und für den Fußbereich lediglich eine Teilluftführung vorliegt.

## Patentansprüche

1. Heiz- und/oder Klimaanlage für ein Fahrzeug mit einem Wärmetauscher (2, 4), dem eine Temperaturklappe (10), ein zumindest abschnittsweise als Mischkammer und/oder Verteiler dienender Kanal, eine Luftstromsteuerklappe (12) und ein Luftausströmer nachgeschaltet sind, **dadurch gekennzeichnet, daß** der Kanal in einem der Verteilung dienenden Abschnitt davon einen im wesentlichen parallel verlaufenden Teilluftführungskanal (22) in einer Kanal-in-Kanal-Ausgestaltung enthält, so daß eine Führung von einem Teil der erwärmten, unter optionaler Zuführung klimatisierter Luft im wesentlichen ohne Störeinfluß anderer Luftströmungen ermöglicht ist.

2. Anlage nach Anspruch 1, **dadurch gekennzeichnet, daß** der Teilluftführungskanal (22) warme Luft hin zu einem Ausströmer führt, der nicht der Defrostausströmer ist, insbesondere hin zu einem Mannausströmer, wie den mittleren Mannauströmer.

3. Anlage nach Anspruch 1 oder 2, **dadurch gekennzeichnet, daß** der Teilluftführungskanal sich im wesentlichen vertikal erstreckt.

4. Anlage nach Anspruch 1, 2 oder 3, **dadurch gekennzeichnet, daß** der Teilluftführungskanal (22) ein Luftfördermittel und/oder eine elektrische Heizeinrichtung, insbesondere PTC Heizeinrichtung enthält.

5. Anlage nach einem der vorangehenden Ansprüche, **dadurch gekennzeichnet, daß** der Teilluftführungskanal an dem Ort in dem Kanal angeordnet ist, an dem der Strömungsweg vom Wärmetauscher (2,4) zum Luftausströmer am kurzesten ist.

6. Anlage nach einem der vorangehenden Ansprüche, **dadurch gekennzeichnet, daß** der Teilluftführungskanal durch die Luftstromsteuerklappe des involvierten Kanalabschnittes verschließbar ist.

7. Anlage nach einem der vorangegangenen Ansprüchen, **dadurch gekennzeichnet, daß** dem Kanal, insbesondere der Teruperaturklappe (10) zumindest ein Luftleitelement (6) vorgeschaltet ist, welches die Luft bei geöffneter Temperaturklappe (10) in den Teilluftführungskanal (22) richtet.

8. Anlage nach einem der vorangegangenen Ansprüchen, **dadurch gekennzeichnet, daß** der Teilluftführungskanal (22) bezüglich einer zur Fahrtrichtung des Fahrzeuges senkrecht verlaufenden Richtung mittig in dem Kanal oder dem involvierten Kanalabschnitt angeordnet ist.

9. Anlage nach einem der vorangegangenen Ansprüchen, **dadurch gekennzeichnet, daß** ein Teil der Wandung des Teilluftführungskanals einen Teil der Wandung des involvierten Kanals oder Kanalabschnittes bildet.

10. Anlage nach einem der vorangegangenen Ansprüche, **dadurch gekennzeichnet, daß** der Durchtrittsquerschnitt des Teilluftführungskanals (22) weniger als ½, insbesondere weniger als 1/3 des Durchtrittsquerschnittes des Kanals ausmacht, und/ oder der Teilluftführungskanal (22) in seiner Geometrie dem betroffenen Kanal oder Kanalabschnitt ähnlich ausgebildet ist.

## Claims

1. A heating and/or air-conditioning unit for a vehicle including a heat exchanger (2, 4), connected downstream of which are a temperature flap (10), a passage serving at least in sections as a mixing chamber and/or distributor, an air flow control flap (12) and an air vent, **characterised in that** a section of the passage acting as a distributor contains an air guiding subpassage (22), extending substantially parallel to it, in a passage-in-passage arrangement so that conducting a portion of the heated air, with the optional supply of conditioned air, is rendered possible substantially without disruptive influence from other air flows.

2. A unit as claimed in Claim 1, **characterised in that** the air guiding subpassage (22) conducts warm air to a vent, which is not the defrosting vent, particularly to a personal vent, such as the central personal vent.

3. A unit as claimed in Claim I or 2, **characterised in that** the air guiding subpassage extends substantially vertically.

4. A unit as claimed in Claim 1, 2 or 3, **characterised in that** the air guiding subpassage (22) includes an air conveying device and/or an electrical heating device, particularly a PTCheating device.

5. A unit as claimed in one of the preceding claims, **characterised in that** the air guiding subpassage is arranged at the location in the passage at which the flow path from the heat exchanger (2, 4) to the air vent is the shortest.

6. A unit as claimed in one of the preceding claims, **characterised in that** the air guiding subpassage may be closed by the air flow control flap of the passage section in question.

7. A unit as claimed in one of the preceding claims, **characterised in that** connected upstream of the passage, in particular of the temperature flap (10), there is at least one air guiding element (6), which directs the air into the air guiding subpassage (22), when the temperature flap (12) is open.

8. A unit as claimed in one of the preceding claims, **characterised in that** the air guiding subpassage (22) is arranged centrally within the passage or the passage section in question with respect to a direction extending perpendicular to the direction of movement of the vehicle.

9. A unit as claimed in one of the preceding claims, **characterised in that** a portion of the wall of the air guiding subpassage constitutes a portion of the wall of the passage or passage section in question.

10. A unit as claimed in one of the preceding claims, **characterised in that** the flow cross-section of the air guiding subpassage (22) is less than one half, in particular less than one third, of the flow cross-section of the passage and/or the geometry of the air guiding subpassage (22) is similar to that of the passage or passage section in question.

## Revendications

1. Installation de chauffage et/ou de climatisation pour véhicule, ayant un échangeur de chaleur (2,4) suivi en aval d'un volet température (10), d'un conduit servant, au moins partiellement, comme chambre de mélange et /ou comme distributeur, d'un volet de contrôle de flux d'air (12) et d'un aérateur, **caractérisée en ce que** le conduit, dans une partie dudit conduit servant à la distribution, contient un conduit d'air partiel (22) aligné en parallèle dans une réalisation conduit-dans-conduit, de manière qu'il soit possible d'acheminer une partie de l'air réchauffé, avec addition optionnelle d'air climatisé, sensiblement sans influence parasite par d'autres flux d'air.

2. Installation selon la revendication 1, **caractérisée en ce que** le conduit d'air partiel (22) amène l'air chaud jusqu'à un aerateur qui n'est pas l'aerateur de dégivrage, en particulier jusqua'à un aerateur propre a dirger l'air vers un occupant du vehicule, tel que le diffuseur central propre a dirger l'air vers un occupant du vehicule.

3. Installation selon la revendication 1 ou 2, **caractérisée en ce que** le conduit d'air partiel s'étend sensiblement en direction verticale.

4. Installation selon la revendication 1, 2 ou 3, **caractérisée en ce que** le conduit d'air partiel (22) comprend un moyen de transport d'air et/ou un dispositif de chauffage électrique, en particulier un dispositif de chauffage CTP.

5. Installation selon l'une quelconque des revendications précédentes, **caractérisée en ce que** le conduit d'air partiel est arrangé dans le conduit à l'endroit où le chemin parcouru par le flux de l'échangeur de chaleur (2,4) au diffuseur d'air ou a l'aérateur est le plus court.

6. Installation selon l'une quelconque des revendications précédentes, **caractérisée en ce que** le conduit d'air partiel est obturable par le volet de contrôle d'air de la partie concerné du conduit.

7. Installation selon l'une quelconque des revendications précédentes, **caractérisée en ce que** qu'en amont du conduit, en particulier du volet température (10) est monté au moins un élément d'aiguillage ou d'acheminement d'air (6) qui, le clapet de température (10) étant ouvert, dirige l'air dans le conduit d'air partiel (22).

8. Installation selon l'une quelconque des revendications précédentes, **caractérisée en ce que** le conduit d'air partiel (22) est arrangé au centre du conduit ou de la partie concerné du conduit en direction perpendiculaire au sens de la marche de la voiture.

9. Installation selon l'une quelconque des revendications précédentes, **caractérisée en ce qu'**une partie de la paroi du conduit d'air partiel constitue une partie de la paroi du conduit ou de la partie du conduit concerné.

10. Installation selon l'une quelconque des revendications précédentes, **caractérisée en ce que** la section de passage du conduit d'air partiel (22) est moins de la moitié, plus particulièrement moins d'un tiers de la section ouverte ou de passage du conduit, et/ou que le conduit d'air partiel (22) est, dans sa géométrie, de forme similaire au conduit ou a la partie ou au secteur du conduit concernés.
